# EUROPEAN PATENT APPLICATION

(11) **EP 4 174 128 A1**
(43) Date of publication of application: **03.05.2023**
(21) Application number: 21833876.2
(22) Date of filing: 17.06.2021
(51) Int. Cl.: C08K 7/04, C08L 101/00, B33Y 10/00, B33Y 80/00, B29C 64/118

(54) **MODELED OBJECT AND METHOD FOR PRODUCING SAME**

(30) Priority: 29.06.2020 JP 2020111636
(71) Applicant: Otsuka Chemical Co., Ltd., Osaka-shi, Osaka 540-0021 (JP)
(72) Inventor: KITAJIMA, Takashi, Tokushima-shi, Tokushima 771-0193 (JP); INADA, Kousuke, Tokyo 101-0048 (JP); YONEZU, Yukio, Tokyo 101-0048 (JP)
(74) Representative: Ter Meer Steinmeister & Partner
(86) International application number: PCT/JP2021/023007
(87) International publication number: WO 2022/004405

(57) **Abstract**

Provided is a method for producing a modeled object easily producible and capable of effectively increasing mechanical properties in modeling using a three-dimensional printer. The method for producing a modeled object includes the steps of: preparing a resin composition containing inorganic fibers with an average fiber length of 1 µm to 300 µm and an average aspect ratio of 3 to 200 and a thermoplastic resin; and modeling an object using the resin composition on a fused deposition modeling-based three-dimensional printer to produce a modeled object, wherein in modeling the object on the fused deposition modeling-based three-dimensional printer, a deposition pitch is less than 0.20 mm and a road width is less than 0.20 mm.

## Description

### Technical Field

The present invention relates to modeled objects in which a resin composition containing inorganic fibers and a thermoplastic resin is used, and methods for producing the same.

### Background Art

A three-dimensional printer requires no mold assembly, which should be used in injection molding, enables the modeling of complicated 3D structures that could not be formed by injection molding, and has therefore recently received attention as a high-mix low-volume manufacturing technology. The three-dimensional printer is a technology to model a 3D object by calculating the shapes of thin cross-sections of the object from three-dimensional data thereon input by a CAD or the like and depositing layer upon layer of a material based on the calculation results and is also referred to as an additive manufacturing technology. On the other hand, injection molding exhibits different resin flow morphologies depending on the location in a mold cavity and, therefore, has difficulty in increasing fiber orientation. Low fiber orientation means that the resin is less likely to obtain the reinforcing effect from the fibrous filler and, therefore, the mechanical properties are less likely to be improved.

Various processes for three-dimensional printing materials (also referred to as additive manufacturing materials) are known. Among them, because of an advantage in terms of cost, a material extrusion process (also referred to as a fused deposition modeling process) is being widely used in which an object is modeled by fluidizing a thermoplastic resin having the shape of a strand called a filament or other shapes with a heating device inside an extrusion head, then discharging the fluid resin through a nozzle onto a platform, and cooling the resin into a solid state while gradually depositing layer upon layer of it according to the cross-sectional shapes of a desired object to be modeled.

If modeling is made using a thermoplastic resin not blended with any additive (a so-called neat resin) on a fused deposition modeling-based three-dimensional printer, there arise problems including layer delamination of a modeled object and warpage of the modeled object. On the other hand, if a thermoplastic resin blended with a fibrous filler, such as glass fibers or carbon fibers, is used on the fused deposition modeling-based three-dimensional printer, there arises a problem of difficulty of modeling due to clogging of the extrusion head, wear of the extrusion head, and so on. Furthermore, it is said that if a thermoplastic resin is blended with an inorganic filler, interlayer fusion of a modeled object is blocked, which decreases the strength against layer delamination and in turn decreases the mechanical properties of the modeled object.

Patent Literature 1 below describes, as a solution to the above problems, that when a resin composition containing inorganic fibers with an average fiber length of 1 µm to 300 µm and an average aspect ratio of 3 to 200 and a thermoplastic resin is used, this makes it easy to produce a modeled object and makes it possible to improve, in modeling an object using a three-dimensional printer, the resistance to layer delamination of the modeled object and the resistance to warpage and shrinkage of the modeled object.

### Citation List

### Patent Literature

Patent Literature 1: WO 2018/043231

### Summary of Invention

### Technical Problem

Recently, modeled objects reinforced with a fibrous filler are being considered to be used for a wide variety of applications, including automobile members and electronic device members, and are being required to further increase their mechanical properties.

However, even a modeled object in Patent Literature 1 has a problem of difficulty in more sufficiently increasing the mechanical properties. In order to increase the mechanical properties, it is conceivable to increase the amount of inorganic fibers added to a resin composition. However, the higher filling of the resin with inorganic fibers is known to decrease the melt fluidity. Therefore, there is a problem of difficulty in modeling an object from a highly inorganic fiber-filled resin composition on a three-dimensional printer.

An object of the present invention is to provide a modeled object easily producible and capable of effectively increasing mechanical properties in modeling using a three-dimensional printer and a method for producing the modeled object.

### Solution to Problem

The present invention provides a modeled object and a method for producing the same, each described below.

Aspect 1: A method for producing a modeled object, the method including the steps of: preparing a resin composition containing inorganic fibers with an average fiber length of 1 µm to 300 µm and an average aspect ratio of 3 to 200 and a thermoplastic resin; and modeling an object using the resin composition on a fused deposition modeling-based three-dimensional printer to produce a modeled object, wherein in modeling the object on the fused deposition modeling-based three-dimensional printer, a deposition pitch is less than 0.20 mm and a road width is less than 0.20 mm.

Aspect 2: The method for producing a modeled object according to aspect 1, wherein an MFR ratio represented by MFR2/MFR1 is not less than 0.10 and not more than 0.90 where MFR1 represents an MFR value of the thermoplastic resin and MFR2 represents an MFR value of the resin composition.

Aspect 3: The method for producing a modeled object according to aspect 1 or 2, wherein a content of the inorganic fibers is not less than 1% by mass and not more than 45% by mass in a total amount of 100% by mass of the resin composition.

Aspect 4: The method for producing a modeled object according to any one of aspects 1 to 3, wherein a rate of modeling is not less than 20 mm/sec and not more than 200 mm/sec.

Aspect 5: The method for producing a modeled object according to any one of aspects 1 to 4, wherein the inorganic fibers have a Mohs hardness of 5 or less.

Aspect 6: The method for producing a modeled object according to any one of aspects 1 to 5, wherein the inorganic fibers are made of at least one of potassium titanate and wollastonite.

Aspect 7: The method for producing a modeled object according to any one of aspects 1 to 6, wherein the thermoplastic resin is at least one selected from the group consisting of polyolefin resin, polystyrene-based resin, polyester-based resin, polyacetal resin, polycarbonate resin, aliphatic polyamide resin, semi-aromatic polyamide resin, polyphenylene sulfide resin, polyether imide resin, and polyether ether ketone resin.

Aspect 8: A modeled obj ect obtained by the method for producing a modeled object according to any one of aspects 1 to 7.

Aspect 9: A modeled object made of a resin composition containing inorganic fibers with an average fiber length of 1 µm to 300 µm and an average aspect ratio of 3 to 200 and a thermoplastic resin and produced by a fused deposition modeling-based three-dimensional printer, wherein a deposition pitch of the modeled object is less than 0.20 mm and a road width of the modeled object is less than 0.20 mm.

Aspect 10: The modeled object according to aspect 9, wherein an MFR ratio represented by MFR2/MFR1 is not less than 0.10 and not more than 0.90 where MFR1 represents an MFR value of the thermoplastic resin and MFR2 represents an MFR value of the resin composition.

Aspect 11: The modeled object according to aspect 9 or 10, wherein a content of the inorganic fibers is not less than 1% by mass and not more than 45% by mass in a total amount of 100% by mass of the resin composition.

### Advantageous Effects of Invention

The present invention enables provision of a modeled object easily producible and capable of effectively increasing mechanical properties in modeling using a three-dimensional printer and a method for producing the modeled object.

### Brief Description of Drawings

[Fig. 1] Fig. 1 is a schematic plan view showing the shape of a flexural test specimen.
[Fig. 2] Fig. 2 is a schematic plan view showing the shape of a tensile test specimen.

### Description of Embodiments

Hereinafter, a description will be given of examples of a preferred embodiment for working of the present invention. However, the following embodiment is simply illustrative. The present invention is not at all limited by the following embodiment.

### [Method for Producing Modeled Object]

A method for producing a modeled object according to the present invention includes: the step (step I) of preparing a resin composition containing inorganic fibers with an average fiber length of 1 µm to 300 µm and an average aspect ratio of 3 to 200 and a thermoplastic resin; and the step (step II) of modeling an object using the resin composition on a fused deposition modeling-based three-dimensional printer to produce a modeled object. In the present invention, in modeling the object on the fused deposition modeling-based three-dimensional printer, a deposition pitch is less than 0.20 mm and a road width is less than 0.20 mm.

Since, in the method for producing a modeled object according to the present invention, a resin composition containing inorganic fibers with an average fiber length of 1 µm to 300 µm and an average aspect ratio of 3 to 200 and a thermoplastic resin is used, this makes it possible to improve, in modeling an object using a three-dimensional printer, the resistance to layer delamination of the modeled object and the resistance to warpage and so on of the modeled object.

In addition, since, in modeling the object on the fused deposition modeling-based three-dimensional printer, the deposition pitch is less than 0.20 mm and the road width is less than 0.20 mm, this makes it easy to produce the modeled object and makes it possible to give the modeled object more excellent mechanical properties.

Conventionally, a modeled object obtained by modeling using a three-dimensional printer has a problem of difficulty in more sufficiently increasing the mechanical properties. Furthermore, in order to increase the mechanical properties, it is conceivable to increase the amount of inorganic fibers added to a resin composition. However, the higher filling of the resin with inorganic fibers tends to decrease the melt fluidity. Therefore, there is a problem of difficulty in modeling an object from a highly inorganic fiber-filled resin composition on a three-dimensional printer.

To cope with this, the Inventors focused attention on the deposition pitch and the road width in modeling an object on a fused deposition modeling-based three-dimensional printer and found that when the deposition pitch and road width are less than respective specific values, the modeled object can be given more excellent mechanical properties.

Also, the Inventors found that when the deposition pitch and the road width are less than respective specific values, this provides, contrary to expectations, even with the use of a highly inorganic fiber-filled resin composition, a stable flow of the resin in the molten state and thus enables modeling using a three-dimensional printer. The reason for this can be that since the resin is stably discharged, the layered resin portions easily bond to each other, which increases the mechanical strength.

Therefore, the method for producing a modeled object according to the present invention makes it easy to produce a modeled object, makes it possible to improve, in modeling using a three-dimensional printer, the resistance to layer delamination of the modeled object and the resistance to warpage and so on of the modeled object, and makes it possible to effectively increase the mechanical properties.

The term "modeled object" used in the present invention includes a "modeled body", a "molded body", and a "molded object".

A description will be given below of the individual steps of the method for producing a modeled object according to the present invention.

### <Step I>

In step I, a resin composition is prepared which contains inorganic fibers (A) with an average fiber length of 1 µm to 300 µm and an average aspect ratio of 3 to 200 and a thermoplastic resin (B) and further contains, as necessary, other additives (C).

### (Inorganic Fibers (A))

Inorganic fibers for use in the present invention are powder formed of fibrous particles and have an average fiber length of 1 µm to 300 µm and an average aspect ratio of 3 to 200. The average fiber length is preferably 1 µm to 200 µm, more preferably 3 µm to 100 µm, and still more preferably 5 µm to 50 µm. The average aspect ratio is preferably 3 to 100, more preferably 5 to 50, and still more preferably 8 to 40. The use of the inorganic fibers having the above average fiber length and average aspect ratio enables, in modeling using a three-dimensional printer, further improvement in the resistance to layer delamination of the modeled object and the resistance to warpage and so on of the modeled object. Since the delamination strength of the modeled object is improved, the mechanical properties of the modeled object can be further increased.

Regarding the inorganic fibers for use in the present invention, their Mohs hardness is, from the viewpoint of wear of an extrusion head, preferably 5 or less, more preferably 1 to 5, and still more preferably 2 to 5. Examples of the type of the inorganic fibers include potassium titanate, wollastonite, aluminum borate, magnesium borate, xonotlite, zinc oxide, and basic magnesium sulfate. Among the above various types of inorganic fibers, at least one selected from potassium titanate and wollastonite is preferred from the viewpoint of mechanical properties . The Mohs hardness is an index indicating the hardness of a substance, wherein when two different minerals are rubbed against each other, scratched one of them is a substance having a lower hardness.

Heretofore known potassium titanates can be widely used and examples include potassium tetratitanate, potassium hexatitanate, and potassium octatitanate. The dimensions of potassium titanate are not particularly limited so long as they are within the above-described dimensions of the inorganic fibers. However, normally, its average fiber diameter is 0.01 µm to 1 µm, preferably 0.05 µm to 0.8 µm, and more preferably 0.1 µm to 0.7 µm, its average fiber length is 1 µm to 50 µm, preferably 3 µm to 30 µm, and more preferably 10 µm to 20 µm, and its average aspect ratio is 10 or more, preferably 10 to 100, and more preferably 15 to 35. In the present invention, even marketed products can be used as potassium titanate and examples that can be used include "TISMO D" (average fiber length: 15 µm, average fiber diameter: 0.5 µm) and "TISMO N" (average fiber length: 15 µm, average fiber diameter: 0.5 µm) both manufactured by Otsuka Chemical Co., Ltd.

Wollastonite is inorganic fibers made of calcium metasilicate. The dimensions of wollastonite are not particularly limited so long as they are within the above-described dimensions of the inorganic fibers. However, normally, its average fiber diameter is 0.1 µm to 15 µm, preferably 1 µm to 10 µm, and more preferably 2 µm to 7 µm, its average fiber length is 3 µm to 180 µm, preferably 10 µm to 100 µm, and more preferably 20 µm to 40 µm, and its average aspect ratio is 3 or more, preferably 3 to 30, and more preferably 5 to 15. In the present invention, even marketed products can be used as wollastonite and an example that can be used is "Bistal W" (average fiber length: 25 µm, average fiber diameter: 3 µm) manufactured by Otsuka Chemical Co., Ltd.

The above average fiber length and average fiber diameter can be measured by observation with a scanning electron microscope (SEM), and the average aspect ratio (average fiber length/average fiber diameter) can be calculated from the average fiber length and the average fiber diameter. For example, a plurality of inorganic fibers are taken with a scanning electron microscope (SEM), the images of 300 inorganic fibers are arbitrarily selected from the observed images of the plurality of inorganic fibers, and their fiber lengths and fiber diameters are measured. The average fiber length can be determined by dividing the sum of all the measured fiber diameters by the number of fibers, and the average fiber diameter can be determined by dividing the sum of all the measured fiber diameters by the number of fibers.

Fibrous particles as used in the present invention refer to particles having an L/B of 3 or more and an L/T of 3 or more where the dimension of the longest side of, among cuboids (circumscribing cuboids) circumscribing the particle, a cuboid having the minimum volume is defined as a length L, the dimension of the second longest side of the cuboid is defined as a breadth B, and the dimension of the shortest side of the cuboid is defined as a thickness T (i.e., B > T) . The length L and the breadth B correspond to the fiber length and the fiber diameter, respectively. Platy particles as used herein refer to particles having an L/B smaller than 3 and an L/T of 3 or more.

Regarding the inorganic fibers, in order to increase the wettability with the thermoplastic resin and further increase physical properties, such as mechanical properties, of the obtained resin composition, treated layers made of a surface treatment agent may be formed on the surfaces of inorganic fibers for use in the present invention. Examples of the surface treatment agent include silane coupling agents and titanium coupling agents. Among them, silane coupling agents are preferred and aminosilane coupling agents, epoxysilane coupling agents, vinylsilane coupling agents, and alkylsilane coupling agents are more preferred. These agents may be used alone or as a mixture of two or more.

Examples of the aminosilane coupling agents include N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-ethoxysilyl-N-(1,3-dimethylbutylidene)propylamine, N-phenyl-3-aminopropyltrimethoxysilane, and N-(vinylbenzyl)-2-aminoethyl-3-aminopropyltrimethoxysilane.

Examples of the epoxysilane coupling agents include 3-glycidyloxypropyl(dimethoxy)methylsilane, 3-glycidyloxypropyltrimethoxysilane, diethoxy(3-glycidyloxypropyl)methylsilane, triethoxy(3-glycidyloxypropyl)silane, and 2-(3,4-epoxycyclohexyl)ethyltrimethoxysilane.

Examples of the vinylsilane coupling agents include vinyltrimethoxysilane, 3-methacryloxypropylmethyldimethoxysilane, 3-methacryloxypropyltrimethoxysilane, 3-methacryloxypropylmethyldiethoxysilane, and 3-methacryloxypropyltriethoxysilane.

Examples of the alkylsilane coupling agents include methyltrimethoxysilane, dimethyldimethoxysilane, trimethylmethoxysilane, methyltriethoxysilane, ethyltrimethoxysilane, n-propyltrimethoxysilane, isobutyltrimethoxysilane, isobutyltriethoxysilane, n-hexyltrimethoxysilane, n-hexyltriethoxysilane, cyclohexylmethyldimethoxysilane, n-octyltriethoxysilane, and n-decyltrimethoxysilane.

Known surface treatment methods can be used as the method for forming treated layers made of a surface treatment agent on the surfaces of the inorganic fibers and examples include: a wet method of dissolving the surface treatment agent in a solvent promoting hydrolysis (for example, water, an alcohol or a mixed solvent of them) to prepare a solution and spraying the solution on the inorganic fibers; and an integral blend method of blending the inorganic fibers and the surface treatment agent with the resin composition.

No particular limitation is placed on the amount of surface treatment agent in treating the surfaces of the inorganic fibers according to the present invention with the surface treatment agent, but, in the case of the wet method, the solution of the surface treatment agent may be sprayed so that the amount of surface treatment agent reaches 0.1 parts by mass to 5 parts by mass and preferably 0.3 parts by mass to 2 parts by mass relative to 100 parts by mass of inorganic fibers. On the other hand, in the case of the integral blend method, the surface treatment agent may be blended with the resin composition so that the amount of surface treatment agent reaches 0.1 parts by mass to 20 parts by mass relative to 100 parts by mass of inorganic fibers. When the amount of surface treatment agent is within the above ranges, the adhesion of the inorganic fibers to the thermoplastic resin can be further increased to further improve the dispersibility of the inorganic fibers.

### (Thermoplastic Resin (B))

The type of the thermoplastic resin for use in the resin composition may be either a crystalline resin or a non-crystalline resin so long as it can be used in fused deposition modeling-based three-dimensional printers and has flow properties in the molten state that enable stable resin discharge without decreasing the head feed speed to be described later. However, a crystalline resin is preferred from the viewpoint of fluidity. The crystalline resin is a thermoplastic resin containing crystals with molecular chains regularly arranged and having a clear melting point. The melting point can be identified by differential scanning calorimetry (DSC) .

More specifically, examples of the thermoplastic resin include: polyolefin resins, such as polypropylene (PP) resin, polyethylene (PE) resin, cyclic polyolefin (COP) resin, and cyclic olefin copolymer (COC) resin; polystyrene-based resins, such as polystyrene (PS) resin, syndiotactic polystyrene (SPS) resin, high-impact polystyrene (HIPS) resin, and acrylonitrile-butylene-styrene copolymer (ABS) resin; polyester-based resins, such as polylactic (PLA) resin, polyethylene terephthalate (PET) resin, and polybutylene terephthalate (PBT) resin; polyacetal (POM) resin; polycarbonate (PC) resin; aliphatic polyamide (PA) resins, such as polyamide 6 resin, polyamide 66 resin, polyamide 11 resin, polyamide 12 resin, polyamide 46 resin, polyamide 6 resin-polyamide 66 resin copolymer (polyamide 6/66 resin), and polyamide 6 resin-polyamide 12 resin copolymer (polyamide 6/12 resin); semi-aromatic polyamide (PA) resins composed of a structural unit with an aromatic ring and a structural unit free from aromatic ring, such as polyamide MXD6 resin, polyamide MXD10 resin, polyamide 6T resin, polyamide 9T resin, and polyamide 10T resin; polyphenylene sulfide (PPS) resin; polyether sulfone (PES) resin; liquid crystal polyester (LCP) resin; aromatic polyether ketone resins, such as polyether ketone (PEK) resin, polyether ether ketone (PEEK) resin, polyether ketone ketone (PEKK) resin, and polyether ether ketone ketone (PEEKK) resin; polyether imide (PEI) resin; polyamide-imide (PAI) resin; and thermoplastic polyimide (TPI) resin.

Preferred among the above thermoplastic resins are polyolefin resin, polystyrene-based resin, polyester-based resin, polyacetal resin, polycarbonate resin, aliphatic polyamide resin, semi-aromatic polyamide resin, polyphenylene sulfide resin, polyether imide resin, and polyether ether ketone resin. More preferred thermoplastic resins are aliphatic polyamide resin, semi-aromatic polyamide resin, polyphenylene sulfide resin, and polyether ether ketone resin.

Mixtures of at least two compatible thermoplastic resins selected from among the above thermoplastic resins, i.e., polymer alloys, or the like can also be used.

### (Other Additives (C))

The resin composition for use in the present invention may contain other additives without impairing its preferred physical properties. Examples of the other additives include: an impact resistance improver; an inorganic filler other than the above-mentioned inorganic fibers (A), such as aramid fibers, polyphenylene benzoxazole (PBO) fibers, glass fibers, carbon fibers, alumina fibers, boron fibers, silicon carbide fibers, calcium carbonate, barium sulfate, mica, sericite, illite, talc, kaolinite, montmorillonite, boehmite, smectite, vermiculite, titanium dioxide, silica, potassium titanate, sodium titanate, potassium magnesium titanate, potassium lithium titanate, boehmite, glass beads or alumina; a solid lubricant, such as polytetrafluoroethylene (PTFE), low-density polyethylene, linear low-density polyethylene, medium density polyethylene, high-density polyethylene, ultra-high molecular weight polyethylene or other polyolefin resins, graphite, molybdenum disulfide, tungsten disulfide or boron nitride; a thermal stabilizer, such as copper compound; a light stabilizer, such as hindered phenol-based light stabilizer; a nucleating agent; an antistat, such as anionic antistat, cationic antistat or non-ionic antistat; an anti-aging agent (antioxidant); a weatherproofer; a metal deactivator; a ultraviolet ray absorber, such as benzophenone-based ultraviolet ray absorber, benzotriazole-based ultraviolet ray absorber, triazine-based ultraviolet ray absorber or salicylate-based ultraviolet ray absorber; a germ- and mildew-proofing agent; a deodorant; a conductive additive, such as carbon-based conductive additive, metal-based conductive additive, metal oxide-based conductive additive or surfactant; a dispersant; a softener (plasticizer), such as polyester-based plasticizer, glycerin-based plasticizer, polycarboxylic acid ester-based plasticizer, phosphoric acid ester-based plasticizer, polyalkylene glycol-based plasticizer or epoxy-based plasticizer; a colorant, such as carbon black, titanium oxide or other pigments, or dye; a flame retardant, such as phosphazene-based compound, phosphoric acid ester, condensed phosphoric acid ester, inorganic phosphorous-based flame retardant, halogen-based flame retardant, silicone-based flame retardant, metal oxide-based flame retardant, metal hydroxide-based flame retardant, organometallic salt-based flame retardant, nitrogen-based flame retardant or boron compound-based flame retardant; an antidripping agent; a sound deadener; a neutralizer; an antiblocking agent; a flow modifier; a mold release agent, such as fatty acid or metal salt of fatty acid; and a lubricant. The resin composition may contain at least one of these additives.

Examples of the impact resistance improver include: olefin-based polymers, such as (ethylene and/or propylene)/α-olefin copolymer, (ethylene and/or propylene)/(α,β-unsaturated carboxylic acid and/or unsaturated carboxylic acid ester) copolymer or ionomer polymer; elastomers, such as styrene-based elastomer, urethane-based elastomer, fluorinated elastomer, vinyl chloride-based elastomer, polyester-based elastomer or polyamide-based elastomer; synthetic rubbers, such as Thiokol rubber, polysulfide rubber, acrylic rubber, silicone rubber, polyether rubber or epichlorohydrin rubber; and natural rubbers. Olefin-based copolymers are preferred in view of thermal resistance. The resin composition may contain at least one of these impact resistance improvers.

The above-mentioned (ethylene and/or propylene)/α-olefin copolymer is a polymer in which ethylene and/or propylene is copolymerized with α-olefin having three or more carbon atoms. Examples of the α-olefin having three or more carbon atoms include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 4-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene, and various combinations of them. Alternatively, ethylene and/or propylene may be copolymerized with a polyene of a non-conjugated diene, such as 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene-8-methyl-1,7-nonadiene, 4,8-dimethyl-1,4,8-decatriene (DMDT), dicyclopentadiene, cyclohexadiene, dicyclooctadiene, methylene norbornene, 5-vinyl norbornene, 5-ethylidene-2-norbornene, 5-methylene-2-norbornene, 5-isopropylidene-2-norbornene, 6-chloromethyl-5-isopropenyl-2-norbornene, 2,3-diisopropylidene-5-norbornene, 2-ethylidene-3-isopropylidene-5-norbornene or 2-propenyl-2,2-norbornadiene.

The above-mentioned (ethylene and/or propylene)/(α,β-unsaturated carboxylic acid and/or unsaturated carboxylic acid ester) copolymer is a polymer in which ethylene and/or propylene is copolymerized with α,β-unsaturated carboxylic acid and/or unsaturated carboxylic acid ester monomer. Examples of the α,β-unsaturated carboxylic acid monomer include acrylic acid and methacrylic acid. Examples of the α,β-unsaturated carboxylic acid ester monomer include methyl esters, ethyl esters, propyl esters, butyl esters, pentyl esters, hexyl esters, heptyl esters, octyl esters, nonyl esters, decyl esters, and the like of the above unsaturated carboxylic acids, and various mixtures of them.

The above-mentioned ionomer polymer is a polymer in which at least some of the carboxyl groups of an olefin/α,β-unsaturated carboxylic acid copolymer are ionized by neutralization of metal ions . Ethylene is preferably used as the olefin and acrylic acid or methacrylic acid is preferably used as the α,β-unsaturated carboxylic acid. However, the olefin and α,β-unsaturated carboxylic acid to be used are not limited to those exemplified above and an olefin may be copolymerized with an unsaturated carboxylic acid ester monomer. Examples of the metal ion include: alkali and alkaline earth metals, such as Li, Na, K, Mg, Ca, Sr, and Ba; Al; Sn; Sb; Ti; Mn; Fe; Ni; Cu; Zn; and Cd.

The impact resistance improver can also be used in the form of a polymer modified with a carboxylic acid and/or its derivative. By the modification with the above component, for example, a functional group having affinity for polyamide resin can be introduced into the molecule of the polyamide resin. Examples of the functional group having affinity for polyamide resin include carboxylic acid group, carboxylic acid anhydride group, carboxylic acid ester group, metallic carboxylate group, carboxylic acid amide group, and epoxy group.

### (Method for Producing Resin Composition)

The resin composition can be produced by mixing and heating (particularly, melt-kneading) the inorganic fibers (A), the thermoplastic resin (B), and, as necessary, the other additives (C) .

For melt-kneading, any known melt kneader, for example, a biaxial extruder, can be used. Specifically, the resin composition can be produced by: (1) a method of preliminarily mixing the components with a mixer (a tumbler, a Henschel mixer or the like), melt-kneading the mixture with a melt kneader, and then pelletizing it with a pelletization device (such as a pelletizer); (2) a method of controlling a master batch of desired components, mixing it with other components as necessary, and melt-kneading the mixture into pellets with a melt kneader; (3) a method of feeding the components into a melt kneader to form pellets; or other methods.

The processing temperature during melt kneading is not particularly limited so long as it is within a temperature range in which the thermoplastic resin (B) can melt. Normally, the cylinder temperature of a melt kneader for use in the melt kneading is adjusted within this range.

As a characteristic value of melt viscosity of the resin composition, the MFR ratio represented by MFR2/MFR1 is preferably not less than 0.10, more preferably not less than 0.20, still more preferably not less than 0.40, and particularly preferably not less than 0.60 where MFR1 represents an MFR value of the thermoplastic resin and MFR2 represents an MFR value of the resin composition. Furthermore, the MFR ratio is preferably not more than 0.90, more preferably not more than 0.80, still more preferably not more than 0.75, and particularly preferably not more than 0.70. When the MFR ratio is within the above ranges, the modeled object can be given more excellent mechanical properties.

The MFR (melt flow rate) value defined in the present invention is an index indicating the viscosity (fluidity) of the resin in the molten state and is measured in conformity with JIS K7210 under a condition of a load of 5 kg with an MFR measurement device. A large MFR value means a low viscosity (high fluidity) in the molten state, while a small MFR value means a high viscosity (low fluidity) in the molten state. The set temperature of the MFR measurement device is appropriately selected according to the nozzle temperature of a three-dimensional printer. For example, when the thermoplastic resin (B) is a crystalline resin, the MFR measurement device is set at a temperature about 50°C higher than the melting point. When the thermoplastic resin (B) is a non-crystalline resin that has no melting point but has a glass transition temperature, the MFR measurement device is set at a temperature about 100°C higher than the glass transition temperature.

The content of the inorganic fibers (A) in the resin composition is, in a total amount of 100% by mass of the resin composition, preferably not less than 1% by mass, more preferably not less than 15% by mass, still more preferably more than 25% by mass, preferably not more than 50% by mass, more preferably not more than 45% by mass, and still more preferably not more than 40% by mass. When the content of the inorganic fibers (A) is the above lower limit or more, the modeled object can be given more excellent mechanical properties. Furthermore, when the content of the inorganic fibers (A) is the above upper limit or less, the productivity can be further increased.

The content of the thermoplastic resin (B) in the resin composition is, in a total amount of 100% by mass of the resin composition, preferably not less than 40% by mass, more preferably not less than 45% by mass, still more preferably not less than 50% by mass, preferably not more than 99% by mass, more preferably not more than 97% by mass, and still more preferably not more than 93% by mass. When the content of the thermoplastic resin (B) is the above lower limit or more, the productivity can be further increased. Furthermore, when the content of the thermoplastic resin (B) is the above upper limit or less, the modeled object can be given more excellent mechanical properties.

No particular limitation is placed on the content of other additives (C) which are additives except for the above-described essential components and allowed to be used in the present invention, without impairing the preferred physical properties of the resin composition according to the present invention. The content of the other additives is normally less than 10% by mass, preferably less than 5% by mass, preferably not less than 0.1% by mass, and more preferably not less than 1% by mass in a total amount of 100% by mass of the resin composition.

By controlling the components of the resin composition within the above respective ranges, the resistance to layer delamination of a modeled object and the resistance to warpage and so on of the modeled object during modeling using a three-dimensional printer can be improved. In addition, the mechanical properties of the modeled object can be increased.

In this manner, the resin composition that is a constituent of the modeled object according to the present invention and exerts desired effects is produced.

### <Step II>

In step II, a modeled object is produced by modeling an object using the resin composition prepared in step I with a fused deposition modeling-based three-dimensional printer (also referred to as an additive manufacturing apparatus).

The fused deposition modeling process is a process for making a desired modeled object by fluidizing a thermoplastic resin having the shape of pellets, the shape of a strand called a filament or other shapes with a heating device inside an extrusion head, then discharging the fluid resin through a nozzle onto a platform, and cooling the resin into a solid state while gradually depositing layer upon layer of it. The use of the above resin composition as a modeling material enables modeling using a fused deposition modeling-based three-dimensional printer without clogging of the extrusion head or wear of the extrusion head that might occur with the use of a resin composition containing a fibrous filler, such as glass fibers or carbon fibers. For example, even through a thin nozzle having a head diameter of 0.5 mm or less, modeling can be achieved without the occurrence of clogging of the extrusion head or wear of the extrusion head. In addition, it can be assumed that, although the reason is not clear, the inorganic fibers (A) can not only improve the resistance to warpage of the modeled object but also increase the interfacial strength between the deposited layers, thus preventing layer delamination of the modeled object.

The method for producing a filament is not particularly limited and an example thereof is a method including: an extrusion step of extruding the resin composition, which was produced by the above-described method, as a molten strand through a die hole in a molder and guiding the molten strand into a cooling water bath to obtain a strand; a stretching step of hot-stretching the strand to obtain a filament; and the step of rolling up the filament.

The shape of the filament is not particularly limited. Examples that can be cited as the cross-sectional shape thereof include circular, rectangular, flattened, ellipsoidal, cocoon-like, trefoil, and like non-circular shapes. The circular shape is preferred from the viewpoint of ease of handling. The length of the filament is not particularly limited and can be set at any value according to industrial production conditions or without interfering with the use for a fused deposition modeling-based three-dimensional printer. The diameter of the filament is also not particularly limited and is, for example, 0.5 mm to 3 mm and particularly 1 mm to 2 mm. The diameter of the filament refers to the maximum of diameters measured on cross-sections of the filament perpendicular to the direction of length of the filament.

The filament may be a composite filament in which the above resin composition is combined with another or other resin components. Examples of the cross-sectional structure of the composite filament include a radially oriented structure, a side-by-side structure, a sea-island structure, and a core-in-sheath structure.

In the method for producing a modeled object according to the present invention, a modeled object can be produced, for example, by feeding a filament made of the above resin composition into a fused deposition modeling-based three-dimensional printer. Specifically, a modeled object can be produced by feeding the filament into a fused deposition modeling-based three-dimensional printer, fluidizing the filament with a heating device inside an extrusion head, then discharging the fluid through a nozzle onto a platform, and cooling it into a solid state while gradually depositing layer upon layer of it according to the cross-sectional shape of a desired object to be modeled.

In the production method according to the present invention, in modeling the object on the fused deposition modeling-based three-dimensional printer, the deposition pitch is less than 0.20 mm and the road width is less than 0.20 mm. The deposition pitch is preferably not more than 0.15 mm, more preferably less than 0.10 mm, and still more preferably not more than 0.08 mm. The road width is preferably not more than 0.18 mm and more preferably not more than 0.16 mm. By setting the deposition pitch and the road width at less than the above upper limit or not more than the above upper limits, the modeled object can be given more excellent mechanical properties. Herein, the deposition pitch refers to the per-layer thickness of the resin layers formed by modeling with a three-dimensional printer and the road width refers to the diameter of the resin composition discharged through the nozzle.

No particular limitation is placed on the lower limit of the deposition pitch in modeling with the fused deposition modeling-based three-dimensional printer, but, for example, it can be set at 0.04 mm from a production viewpoint. The lower limit of the road width is also not particularly limited, but, for example, can be set at 0.07 mm from a production viewpoint.

The printing speed (head feed speed) of the fused deposition modeling-based three-dimensional printer is, from the viewpoint of reduction in production time for the modeled object and the viewpoint of the orientation of inorganic fibers, preferably 20 mm/sec or higher and more preferably 40 mm/sec or higher. However, if the printing speed is too high, the modelability becomes poor. Therefore, the upper limit of the printing speed is normally 200 mm/sec or lower.

The diameter of the extrusion head is, from the viewpoint of head feed speed, preferably less than 0.5 mm, more preferably 0.4 mm or less, and still more preferably 0.3 mm or less, and preferably not less than 0.1 mm. The deposition pitch is preferably 20% to 50% of the diameter of the extrusion head and the road width is preferably 60% to 80% of the diameter of the extrusion head.

The temperature of molten resin discharged from the extrusion head (discharge temperature) can be appropriately selected depending on the thermoplastic resin for use in the printer so that the above head feed speed can be achieved.

It can be considered that when the head feed speed is controlled within the above range in the fused deposition modeling-based three-dimensional printer, strand-like resin is deposited layer upon layer in a specific direction while the inorganic fibers in the molten resin are oriented in a direction of discharge, and, therefore, the orientation of the inorganic fibers in the modeled object is further increased. Furthermore, since the modeled object is produced while strand-like resin discharged from the extrusion head is deposited layer upon layer in the specific direction, the direction of orientation of the inorganic fibers is less likely to vary from portion to portion of the modeled object. It can be considered that, for these reasons, the modeled object can be given more excellent mechanical properties.

### [Modeled Object]

A modeled object according to the present invention is a modeled obj ect made of a resin composition containing inorganic fibers with an average fiber length of 1 µm to 300 µm and an average aspect ratio of 3 to 200 and a thermoplastic resin and produced by a fused deposition modeling-based three-dimensional printer. Since the modeled object is made of a resin composition containing inorganic fibers with an average fiber length of 1 µm to 300 µm and an average aspect ratio of 3 to 200 and a thermoplastic resin, the modeled object can be easily produced and the resistance to layer delamination and the resistance to warpage and so on in modeling the object using a three-dimensional printer can be improved. The modeled object according to the present invention can be produced, for example, by the above-described method for producing a modeled object. Therefore, the resin composition described in the above section on the production method can be used as the resin composition in the modeled object.

The modeled object according to the present invention has a deposition pitch (thickness per layer) of less than 0.20 mm and a road width of less than 0.20 mm. The deposition pitch is preferably not more than 0.15 mm, more preferably less than 0.10 mm, and still more preferably not more than 0.08 mm. The road width is preferably not more than 0.18 mm and more preferably not more than 0.16 mm. By setting the deposition pitch and the road width at less than the above upper limit or not more than the above upper limits, the modeled object can be given more excellent mechanical properties.

As a characteristic value of melt viscosity of the resin composition in the modeled object according to the present invention, the MFR ratio represented by MFR2/MFR1 is preferably not less than 0.10, more preferably not less than 0.20, still more preferably not less than 0.40, and particularly preferably not less than 0.60 where MFR1 represents an MFR value of the thermoplastic resin and MFR2 represents an MFR value of the resin composition. Furthermore, the MFR ratio is preferably not more than 0.90, more preferably not more than 0.80, still more preferably not more than 0.75, and particularly preferably not more than 0.70. When the MFR ratio is within the above ranges, the modeled object can be given more excellent mechanical properties.

As for the modeled object according to the present invention, an excellent effect that would not be obtained by injection molding can be achieved in a modeled object having a maximum thickness of preferably 1 mm or more, more preferably 2 mm or more, and still more preferably 4 mm or more in a direction of layer deposition during modeling and a minimum thickness of preferably 1 mm or more, more preferably 2 mm or more, and still more preferably 4 mm or more in the direction of layer deposition during modeling.

In the modeled object according to the present invention, the inorganic fibers preferably has an average orientation angle of 24° or lower. When the orientation angle of the inorganic fibers is the above upper limit or lower, the effect of reinforcing a matrix resin with the inorganic fibers can be produced at maximum and, thus, the modeled object can be given more excellent mechanical properties.

The orientation angle of inorganic fibers indicates the state of orientation of inorganic fibers in a modeled object. In the present invention, the orientation angle of inorganic fibers refers to, when a direction parallel to a direction of progress of modeling during modeling of an object is defined as 0° and a direction perpendicular to the direction of progress of modeling is defined as 90°, the angle of a direction of the long axis of the inorganic fibers made with the direction of progress of modeling. Specifically, the orientation angle of inorganic fibers is defined as 0° when the inorganic fibers are oriented exactly in the direction of progress of modeling, the orientation angle thereof is defined as 45° when the inorganic fibers are not oriented relative to the direction of progress of modeling, and the orientation angle thereof is defined as 90° when the inorganic fibers are oriented perpendicular to the direction of progress of modeling. When the modeled object is a member modeled by injection molding, the direction of progress of modeling means a direction of resin flow.

The modeled object according to the present invention has excellent mechanical properties. For this reason, the modeled object according to the present invention can be suitably used for structural members requiring mechanical properties, such as gear members, a bearing retainer, and production jigs.

### Examples

Hereinafter, a detailed description will be given of the present invention with reference to working examples and comparative examples, but the present invention is not at all limited to these examples. Specific raw materials used in the working examples and comparative examples are as described below. The average fiber length, average fiber diameter, and average aspect ratio of inorganic fibers were measured using a field-emission scanning electron microscope (SEM, S-4800 manufactured by Hitachi High-Technologies Corporation).

### (Inorganic Fibers)

Potassium titanate (trade name: TISMO D102, manufactured by Otsuka Chemical Co., Ltd., average fiber length: 15 µm, average fiber diameter: 0.5 µm, average aspect ratio: 30)

### (Thermoplastic Resin)

Polyamide MXD10 resin (trade name: LEXTER8000, manufactured by Mitsubishi Gas Chemical Company, Inc., melting point: 188°C)

Polyphenylene sulfide (PPS) resin (trade name: TORELINA PPS L2120-60, manufactured by Toray Industries, Inc., melting point: 280°C)

Polyether ether ketone (PEEK) resin (trade name: PEEK 381G, manufactured by Victrex plc, melting point: 343°C)

In measuring the melting point, a measurement sample was heated to a temperature above its expected melting point at a rate of temperature increase of 10°C/min using a differential scanning calorimeter (DSC). Subsequently, the measurement sample was cooled to 0°C at a rate of temperature decrease of 10°C/min and then allowed to stand for one minute as it was. Thereafter, the measurement sample was heated again at a rate of temperature increase of 10°C/min and the melting peak during the heating was measured and defined as the melting point.

<Production of Resin Composition and Filament>

Materials were melt-kneaded in each composition ratio shown in Table 1 using a biaxial extruder, thus producing pellets. The cylinder temperature of the biaxial extruder was 190°C to 220°C in use of polyamide MXD10 resin, 280°C to 300°C in use of PPS resin, and 330°C to 380°C in use of PEEK resin.

The obtained pellets were loaded into a filament extruder, thus obtaining a filament with a filament diameter of 1.75 mm.

**[Table 1]**

| Filament No. | | 1 | 2 | 3 | 4 |
|---|---|---|---|---|---|
| Composition | polyamide MXD10 resin (% by mass) | 70 | 80 | | |
| | PPS resin (% by mass) | | | 80 | |
| | PEEK resin (% by mass) | | | | 80 |
| | potassium titanate (% by mass) | 30 | 20 | 20 | 20 |
| Melt Viscosity Characteristic Value | MFR2 (g/10 min) | 44.01 | 49.46 | 126.85 | 11.22 |
| | MFR ratio | 0.68 | 0.77 | 0.76 | 0.72 |

### <Production of Modeled Object>

### (Examples 1 to 8 and Comparative Examples 1 to 4)

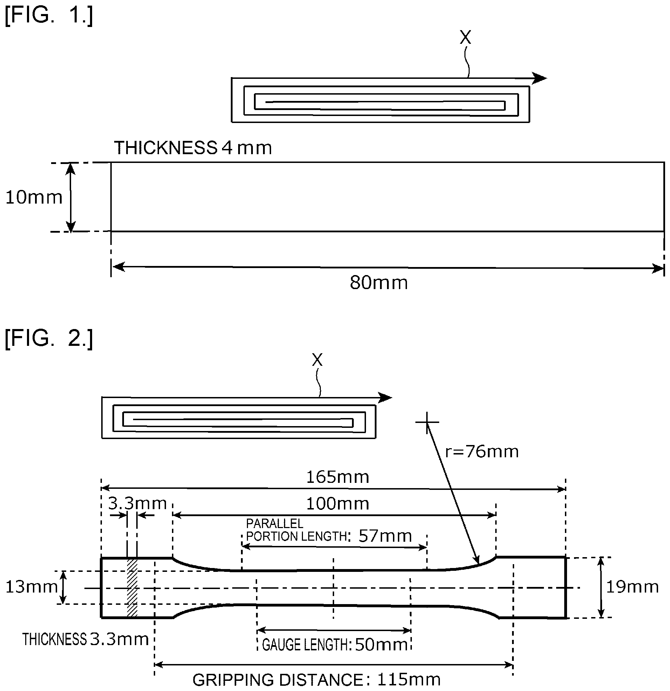

In Examples 1 to 8 and Comparative Examples 1 to 2, a filament obtained in the above manner was produced into a flexural test specimen (conforming to ISO 178) having a shape shown in Fig. 1 by a fused deposition modeling-based three-dimensional printer under the associated printing conditions shown in Table 2. In Examples 1 to 6 and Comparative Examples 1 to 2, a 3D printer manufactured by Raise 3D Technologies, Inc. and having a trade name of Raise3D N2 was used as the fused deposition modeling-based three-dimensional printer. In Examples 7 to 8, a 3D printer manufactured by Slab and having a trade name of MothMath S3DP222 was used as the fused deposition modeling-based three-dimensional printer, particularly by adjusting the upper temperature limit of the nozzle head to 450°C.

In the modeling, an object was modeled concentrically outwardly from the center along a direction shown by the arrow X in Fig. 1. The direction of layer deposition was set to a thickness direction of the flexural test specimen. An object where the roads did not bond together and peeled off like a mille-feuille was evaluated to be non-modelable.

In Comparative Examples 3 to 4, pellets made of a source material for filament shown in Table 1 were used and injection-molded through a gate provided so that the direction of resin flow coincided with the direction of progress of modeling in a three-dimensional printer, thus producing a flexural test specimen (conforming to ISO 178) having a shape shown in Fig. 1.

In Examples 1 to 7 and Comparative Examples 1 to 2, a filament obtained in the above manner was produced into a tensile test specimen (ASTM D638 Type I) having a shape shown in Fig. 2 by a fused deposition modeling-based three-dimensional printer under the associated printing conditions shown in Table 3. In Examples 1 to 6 and Comparative Examples 1 to 2, a 3D printer manufactured by Raise 3D Technologies, Inc. and having a trade name of Raise3D N2 was used as the fused deposition modeling-based three-dimensional printer. In Example 7, a 3D printer manufactured by Slab and having a trade name of MothMath S3DP222 was used as the fused deposition modeling-based three-dimensional printer, particularly by adjusting the upper temperature limit of the nozzle head to 450°C.

In the modeling, an object was modeled concentrically outwardly from the center along a direction shown by the arrow X in Fig. 2. The direction of layer deposition was set to a thickness direction of the tensile test specimen. An object where the roads did not bond together and peeled off like a mille-feuille was evaluated to be non-modelable.

In Comparative Examples 3 to 4, pellets made of a source material for filament shown in Table 3 were used and injection-molded through a gate provided so that the direction of resin flow coincided with the direction of progress of modeling in a three-dimensional printer, thus producing a tensile test specimen (ASTM D638 Type I) having a shape shown in Fig. 2.

### <Evaluations>

### (1) Flexural Strength and Flexural Modulus

The flexural test specimens produced under conditions shown in Table 2 were subjected to a three-point flexural test with a tester Autograph AG-5000 (manufactured by Shimadzu Corporation) in conformity with ISO 178 to measure their flexural strengths and flexural moduli. The results are shown in Table 2.

### (2) Tensile Strength and Tensile Modulus

The tensile test specimens produced under conditions shown in Table 3 were measured in terms of tensile strength and tensile modulus with a tester Autograph AG-1 (manufactured by Shimadzu Corporation) in conformity with ISO 0527-1. The results are shown in Table 3.

### (3) MFR Ratio

Each thermoplastic resin and the resin composition containing it were measured in terms of MFR value under conditions of a given measurement temperature (polyamide MXD10 resin: 240°C, PPS resin: 330°C, PEEK resin: 400°C) and a measurement load of 5 kg in conformity with JIS K 7210, the MFR value of the thermoplastic resin was defined as MFR1, and the MFR value of the resin composition was defined as MFR2. The MFR ratio (MFR2/MFR1) was calculated from the obtained MFR values. The results are shown in Table 1 above.

**[Table 2]**

| | | Ex. 1 | Ex. 2 | Ex. 3 | Ex. 4 | Ex. 5 | Ex. 6 | Ex. 7 | Ex. 8 | Comp. Ex. | 1 Comp. Ex. | 2 Comp. Ex. | 3 Comp. Ex. 4 |
|---|---|---|---|---|---|---|---|---|---|---|---|---|---|
| Filament No. | | 1 | 1 | 2 | 2 | 3 | 3 | 4 | 4 | 1 | 2 | | |
| Composition | polyamide MXD10 resin (% by mass) PPS resin (% by mass) | 70 | 70 | 80 | 80 | 80 | 80 | | | 70 | 80 | 70 | 80 |
| | PEEK resin (% by mass) | | | | | | | 80 | 80 | | | | |
| | potassium titanate (% by mass) | 30 | 30 | 20 | 20 | 20 | 20 | 20 | 20 | 30 | 20 | 30 | 20 |
| Modeling Conditions | nozzle temperature (°C) | 250 | 250 | 250 | 250 | 310 | 310 | 450 | 450 | 250 | 250 | Injection molding | Injection molding |
| | heated bed temperature (°C) | 85 | 85 | 85 | 85 | 100 | 100 | 120 | 120 | 85 | 85 | | |
| | head feed speed (mm/sec) | 60 | 60 | 60 | 60 | 60 | 60 | 30 | 30 | 60 | 60 | | |
| | head diameter (mm) | 0.20 | 0.20 | 0.20 | 0.20 | 0.20 | 0.20 | 0.20 | 0.20 | 0.20 | 0.20 | | |
| | road width (mm) | 0.15 | 0.15 | 0.15 | 0.15 | 0.15 | 0.15 | 0.15 | 0.15 | 0.20 | 0.20 | | |
| | deposition pitch (mm) | 0.05 | 0.10 | 0.05 | 0.10 | 0.05 | 0.10 | 0.05 | 0.10 | 0.20 | 0.20 | | |
| Physica Properties of Modeled Object | flexural strength (MPa) | 212 | 194 | 193 | 174 | 139 | 128 | 210 | 192 | non-modelable | 157 | 171 | 140 |
| | flexural modulus (GPa) | 9.3 | 8.4 | 7.2 | 6.5 | 8.0 | 6.6 | 8.1 | 7.5 | | 5.7 | 8.1 | 5.7 |

**[Table 3]**

| | | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 | Comp. Ex. 4 |
|---|---|---|---|---|---|---|---|---|---|---|---|---|
| Filament No. | | 1 | 1 | 2 | 2 | 3 | 3 | 4 | 1 | 2 | | |
| Composition | polyamide MXD10 resin (% by mass) | 70 | 70 | 80 | 80 | | | | 70 | 80 | 70 | 80 |
| | PPS resin (% by mass) | | | | | 80 | 80 | | | | | |
| | PEEK resin (% by mass) | | | | | | | 80 | | | | |
| | potassium titanate (% by mass) | 30 | 30 | 20 | 20 | 20 | 20 | 20 | 30 | 20 | 30 | 20 |
| Modeling Conditions | nozzle temperature (°C) | 250 | 250 | 250 | 250 | 310 | 310 | 450 | 250 | 250 | Injection molding | Injection molding |
| | heated bed temperature (°C) | 85 | 85 | 85 | 85 | 100 | 100 | 120 | 85 | 85 | | |
| | head feed speed (mm/sec) | 60 | 60 | 60 | 60 | 60 | 60 | 30 | 60 | 60 | | |
| | head diameter (mm) | 0.20 | 0.20 | 0.20 | 0.20 | 0.20 | 0.20 | 0.20 | 0.20 | 0.20 | | |
| | road width (mm) | 0.15 | 0.15 | 0.15 | 0.15 | 0.15 | 0.15 | 0.15 | 0.20 | 0.20 | | |
| | deposition pitch (mm) | 0.05 | 0.10 | 0.05 | 0.10 | 0.05 | 0.10 | 0.05 | 0.20 | 0.20 | | |
| Physical Properties of Modeled Object | tensile strength (MPa) | 137 | 110 | 116 | 90 | 79 | 70 | 120 | non-modelable | 89 | 110 | 90 |
| | tensile modulus (GPa) | 8.1 | 7.5 | 6.3 | 5.4 | 6.8 | 5.7 | 6.4 | | 5.3 | 7.5 | 5.1 |

It can be seen from Tables 2 and 3 that, in Examples 1 to 4, since the deposition pitch and the road width in modeling the object on the fused deposition modeling-based three-dimensional printer were less than 0.20 mm and less than 0.20 mm, respectively, the mechanical properties were increased. Furthermore, it has been confirmed that also in the case of using PPS resin or PEEK resin as the thermoplastic resin as in Examples 5 to 8, when the deposition pitch and the road width in modeling the object on the fused deposition modeling-based three-dimensional printer were less than 0.20 mm and less than 0.20 mm, respectively, the mechanical properties were increased as compared to when at least one of the deposition pitch and the road width was 0.20 mm or more.

As is obvious from comparison between Comparative Examples 1 and 2, a highly inorganic fiber-filled resin composition generally has difficulty in modeling an object on a three-dimensional printer. Unlike this, it can be seen that when the deposition pitch is less than 0.20 mm and the road width is less than 0.20 mm as in Examples 1 to 8, this provides unexpected effects of making it possible to model an object on a three-dimensional printer and making it possible to give the modeled object excellent mechanical properties.

## Claims

1. A method for producing a modeled object, the method comprising the steps of:
preparing a resin composition containing inorganic fibers with an average fiber length of 1 µm to 300 µm and an average aspect ratio of 3 to 200 and a thermoplastic resin; and
modeling an object using the resin composition on a fused deposition modeling-based three-dimensional printer to produce a modeled object,
wherein in modeling the object on the fused deposition modeling-based three-dimensional printer, a deposition pitch is less than 0.20 mm and a road width is less than 0.20 mm.

2. The method for producing a modeled object according to claim 1, wherein an MFR ratio represented by MFR2/MFR1 is not less than 0.10 and not more than 0.90 where MFR1 represents an MFR value of the thermoplastic resin and MFR2 represents an MFR value of the resin composition.

3. The method for producing a modeled object according to claim 1 or 2, wherein a content of the inorganic fibers is not less than 1% by mass and not more than 45% by mass in a total amount of 100% by mass of the resin composition.

4. The method for producing a modeled object according to any one of claims 1 to 3, wherein a rate of modeling is not less than 20 mm/sec and not more than 200 mm/sec.

5. The method for producing a modeled object according to any one of claims 1 to 4, wherein the inorganic fibers have a Mohs hardness of 5 or less.

6. The method for producing a modeled object according to any one of claims 1 to 5, wherein the inorganic fibers are made of at least one of potassium titanate and wollastonite.

7. The method for producing a modeled object according to any one of claims 1 to 6, wherein the thermoplastic resin is at least one selected from the group consisting of polyolefin resin, polystyrene-based resin, polyester-based resin, polyacetal resin, polycarbonate resin, aliphatic polyamide resin, semi-aromatic polyamide resin, polyphenylene sulfide resin, polyether imide resin, and polyether ether ketone resin.

8. A modeled obj ect obtained by the method for producing a modeled object according to any one of claims 1 to 7.

9. A modeled object made of a resin composition containing inorganic fibers with an average fiber length of 1 µm to 300 µm and an average aspect ratio of 3 to 200 and a thermoplastic resin and produced by a fused deposition modeling-based three-dimensional printer, wherein a deposition pitch of the modeled object is less than 0.20 mm and a road width of the modeled object is less than 0.20 mm.

10. The modeled object according to claim 9, wherein an MFR ratio represented by MFR2/MFR1 is not less than 0.10 and not more than 0.90 where MFR1 represents an MFR value of the thermoplastic resin and MFR2 represents an MFR value of the resin composition.

11. The modeled object according to claim 9 or 10, wherein a content of the inorganic fibers is not less than 1% by mass and not more than 45% by mass in a total amount of 100% by mass of the resin composition.
